# EUROPÄISCHE PATENTSCHRIFT

(11) **EP 1 290 320 B1**
(45) Veröffentlichungstag und Bekanntmachung des Hinweises auf die Patenterteilung: **25.01.2006**
(21) Anmeldenummer: 01951346.4
(22) Anmeldetag: 19.05.2001
(51) Int. Cl.: F02B 23/10, F02D 13/02, F02B 31/08

(54) **BRENNSTOFFEINSPRITZSYSTEM UND VERFAHREN ZUR BRENNSTOFFEINSPRITZUNG**
FUEL INJECTION SYSTEM AND METHOD FOR THE INJECTION OF FUEL
SYSTEME ET PROCEDE D'INJECTION DE CARBURANT

(30) Priorität: 26.05.2000 DE 10026322
(43) Veröffentlichungstag der Anmeldung: 12.03.2003
(73) Patentinhaber: ROBERT BOSCH GMBH, 70442 Stuttgart (DE)
(72) Erfinder: HEYSE, Joerg, 74354 Besigheim (DE)
(86) Internationale Anmeldenummer: PCT/DE2001/001912
(87) Internationale Veröffentlichungsnummer: WO 2001/090542

(56) Entgegenhaltungen:
- WO-A-99/53179
- DE-A- 19 610 468
- DE-A- 19 716 642
- DE-A- 19 726 683
- DE-A- 19 733 137
- US-A- 6 047 592
- US-A- 6 055 948

## Beschreibung

### Stand der Technik

Die Erfindung geht aus von einem Brennstoffeinspritzsystem nach der Gattung des Anspruchs 1 sowie von einem Verfahren zur Brennstoffeinspritzung nach der Gattung des Anspruchs 8. (Siehe DE -A- 197 26 683).

Bei gemischverdichtenden, fremdgezündeten Brennkraftmaschinen mit innerer Gemischbildung, bei denen der Brennstoff direkt in den Brennraum eingespritzt wird, ist es nötig, im Bereich der Zündkerze ein bestimmtes Brennstoff-Luft-Verhältnis im zündfähigen Bereich zum Zeitpunkt der Zündung zu erzeugen. Dies ist insbesondere dann nicht einfach zu verwirklichen, wenn eine Brennkraftmaschine nach einem sogenannten Magermixkonzept arbeitet. Bei solchen Brennkraftmaschinen mit Magermixbetrieb arbeitet die Brennkraftmaschine im Teillastbetrieb, der den größten Teil der Betriebszustände ausmacht, im Normalfall mit Luftüberschuß. Das Gemisch ist dann nicht mehr sicher zündfähig. Um jedoch die erheblichen Vorteile, wie geringer Brennstoffverbrauch, solcher Magermixkonzepte nutzen zu können, muß nun ein zündfähiges Gemisch zum Zeitpunkt der Zündung an der Zündkerze sichergestellt werden. Dies geschieht durch Schichtladeverfahren.

Aus der DE 196 42 653 C1 ist ein Verfahren bekannt, um in den Zylindern von direkteinspritzenden Brennkraftmaschinen ein zündfähiges Brennstoff/Luftgemisch zu bilden. Dabei wird in jedem von einem Kolben begrenzten Brennraum mittels eines Injektors eine Düsenöffnung durch Anheben eines Ventilgliedes von einem die Düsenöffnung umfassenden Ventilsitz freigegeben. Hieraus wird Brennstoff eingespritzt. Um unter allen Betriebsbedingungen der Brennkraftmaschine, insbesondere im Schichtladungsbetrieb, eine verbrauchs- und emissionsoptimierte innere Gemischbildung an jedem Betriebspunkt des Kennfelds der Betriebszustände zu ermöglichen, ist vorgesehen, daß der Öffnungshub des Ventilgliedes und die Einspritzzeit variabel einstellbar sind. Nachteilig bei diesem bekannten Stand der Technik ist jedoch, daß keinerlei Einfluß auf die Strömungsverhältnisse im Brennraum genommen wird. Die Anordnung des Einlaßventils sowie die Gestaltung des zugeordneten Einlaßkanals erfolgt unter dem Gesichtspunkt, daß ein möglichst hoher Füllungsgrad des Brennraums mit Luft unter den Betriebsbedingungen der Teillast und der Vollast erreicht wird. Für den im Teillastbetrieb besonders interessanten Magermixbetrieb, bei dem es entscheidend darauf ankommt, im Bereich der Zündkerze ein zündfähiges Gemisch zu erreichen, um einen sicheren Betrieb der Brennkraftmaschine zu gewährleisten, ist es daher schwierig, mit der Regelung des Brennstoffeinspritzventils allein die gesetzten Ziele zu erreichen.

Aus der DE 197 47 035 A1 ist eine variable Ventilsteuerung bekannt. Bei dieser werden die Einlaßventile einer Brennkraftmaschine durch zwei Nockenwellen betätigt, wobei die eine Nockenwelle den Öffnungshub bewirkt und die andere Nockenwelle den Schließhub steuert. Die beiden Nockenwellen sind zueinander durch ein insgesamt vierrädriges sogenanntes Koppelgetriebe miteinander verbunden, wodurch ihr relativer Drehwinkel zueinander verstellt werden kann. Gleichzeitig erfolgt von der einen Nockenwelle, die z. B. über Zahnriemen, Stirnradgetriebe oder Duplexkette angetrieben wird, der Antrieb der zweiten Nockenwelle über dieses Koppelgetriebe. Der Gesamtöffnungshub, die Dauer als auch der Beginn des Öffnungshubes können somit individuell gesteuert werden. Der dort beschriebene Stand der Technik ist jedoch vorrangig dazu vorgesehen, um eine sogenannte drosselfreie Laststeuerung bei Ottomotoren durch Veränderung des Hubs und der Steuerzeiten der Einlaßventile zu bewirken. Auch wenn durch eine solche Ventilsteuerung die Strömungsverhältnisse im Brennraum der Brennkraftmaschine verändert werden können, so geht aus der zitierten Druckschrift jedoch keine Methode hervor, gezielt durch Veränderung der Strömungsverhältnisse einer Zündkerze ein Gemisch in einer zündfähigen Konzentration aus Luft und Brennstoff zuzuführen.

Weiter ist aus der DE 198 04 463 A1, ein Brennstoffeinspritzsystem für gemischverdichtende, fremdgezündete Brennkraftmaschinen bekannt, bei welchem das Brennstoffeinspritzventil wenigstens eine Reihe von über den Umfang eines Düsenkörpers des Brennstoffeinspritzventils verteilt angeordneten Einspritzlöchern aufweist. Durch die gezielte Einspritzung von Brennstoff über diese Einspritzlöcher wird die Bildung einer gerichteten Gemischwolke realisiert, wobei mehrere Brennstoffstrahlen in Richtung auf die Zündkerze gerichtet sind, um dort ein zündfähiges Gemisch zu ermöglichen. Nachteilig bei diesem bekannten Stand der Technik ist, daß dies am besten dann funktioniert, wenn die Luft, in die gespritzt wird, nicht in Bewegung ist. Jede Verwirbelung und Strömung der Luft, in die eingespritzt wird, erschwert die Vorherbestimmung, in welche Richtung die Gemischwolke getrieben wird. Dies gilt um so mehr bei einer Brennkraftmaschine, die einmal im Teillastbetrieb und einmal im Vollastbetrieb läuft und daher völlig unterschiedliche Strömungsverhältnisse aufweist.

Aus der EP 0 375 789 B1 ist eine Zweitakt-Brennkraftmaschine bekannt, die einen Druckluftkanal mit einer Einspritzdüse aufweist. Bei dieser Zweitakt-Brennkraftmaschine wird der Gaswechsel durch zwei Ventile bewirkt. Um die sogenannten Beiblasverluste in der Überschneidungszeit, wenn sowohl Einlaß-, wie auch Auslaßventil geöffnet sind, zu minimieren, erfolgt eine direkte Einspritzung von Brennstoff in den Brennraum. Dabei wird der Brennstoff zunächst in den Druckluftkanal eingespritzt und vermittels Druckluft zielgerichtet in Richtung Zündkerze getrieben. Nachteilig bei dem dort beschriebenen Stand der Technik ist jedoch, daß eine zusätzliche Versorgung mit Druckluft nötig ist und der Aufbau insgesamt kompliziert ist.

Schließlich ist aus der US 5 421 301 eine Brennkraftmaschine bekannt, bei der ein Brennstoffeinspritzventil so auf das Auslaßventil gerichtet ist, daß dorthin zielgerichtet Brennstoff gespritzt werden kann. Diese bekannte Ausführungsform eines Brennstoffeinspritzsystems dient jedoch vorrangig der Kühlung dieses Auslaßventils und nicht der Erzeugung eines zündfähigen Gemisches im Bereich der Zündkerze.

Der Gemischtransport zur Zündkerze und die Erzeugung eines lokal beschränkten zündfähigen Gemisches in den Betriebszuständen des Leerlaufs und des unteren Teillastbereiches, bei denen die Vorteile eines Magermixkonzeptes, wie geringer Brennstoffverbrauch, besonders zum Tragen kommen, gelingt beim Stand der Technik nur sehr unvollkommen. Die Richtung der Einströmung der Luft in den Brennraum wird nur für den Betrieb unter Vollast optimiert. Mit den bisher bekannten Vorrichtungen und Verfahren ist es nicht möglich, an unterschiedlichen Betriebspunkten des Kennfeldes, gezielt eine Gemischwolke aus Brennstoff und Luft, die zündfähig ist, durch die Strömungen im Brennraum zur Zündkerze zu tragen. Die bisher bekannten Brennstoffeinspritzsysteme und Verfahren zur Einspritzung von Brennstoff sind daher nicht optimal für den Magermixbetrieb geeignet.

### Vorteile der Erfindung

Das erfindungsgemäße Brennstoffeinspritzsystem mit den kennzeichnenden Merkmalen des Anspruchs 1 und das erfindungsgemäße Verfahren mit den kennzeichnenden Merkmalen des Anspruchs 8 haben demgegenüber den Vorteil, daß eine Gemischwolke im Bereich der Zündkerze erzeugt werden kann, die im Umfang relativ klein ist und die das zur Zündung nötige Verhältnis von Brennstoff zu Luft aufweist. Hierdurch kann vorteilhafterweise die Brennkraftmaschine im Teillastbereich mit einem sehr geringen Verbrauch an Brennstoff betrieben werden.

Vorteilhaft kann sichergestellt werden, daß der Brennstofftransport zur Zündkerze im gesamten Betriebsbereich, also für das gesamte Kennfeld, ausreichend erfolgt.

Durch die in den Unteransprüchen aufgeführten Maßnahmen, sind vorteilhafte Weiterbildungen des im Anspruch 1 angegebenen Brennstoffeinspritzsystems bzw. des im Anspruch 8 angegebenen Verfahrens möglich.

Insbesondere kann vorteilhaft eine Reduzierung der Benetzung einer vorhandenen Kolbenmulde des Kolbens bewirkt werden. Diese Benetzung tritt bei später Einspritzung auf.

Weiter kann vorteilhaft und abhängig von der Last durch die Beeinflussung der Strömungsverhältnisse der eingespritzte Brennstoffstrahl erweitert oder verengt werden, um eine Schichtladewolke zu erzielen. Diese weist dann typischerweise ein λ-Verhältnis zwischen 1 und 1,5 auf; das einem gut zündfähigen Gemisch entspricht und somit ein Brennraumvolumen einnimmt, welches zur eingespritzten Brennstoffmenge paßt.

Vorteilhaft kann der Transport des Brennstoffs zur Zündkerze bei geringer Last durch eine die Brennstoffwolke antreibende Strömung, d. h. durch einen Luftstrom, der den Strahl in Richtung Zündkerze treibt, gefördert werden.

Vorteilhaft kann mit der vorliegenden Erfindung eine gewünschte Schichtladung mit einer Brennstoffkonzentration im Bereich der Zündkerze, die im zündfähigen Bereich liegt, ohne aufwendige geometrische Gestaltung des Brennraums oder eine schwierig umzusetzende Positionierung des Brennstoffeinspritzventils verwirklicht werden.

### Zeichnung

Ausführungsbeispiele der Erfindung sind in der Zeichnung vereinfacht dargestellt und in der nachfolgenden Beschreibung näher erläutert. Es zeigen:
- Fig. 1: in geschnittener Darstellung eines Brennraums eine Ausführungsform eines erfindungsgemäßen Brennstoffeinspritzsystems mit einem seitlich angeordneten Brennstoffeinspritzventil im Betriebszustand der Teillast;
- Fig. 2: in geschnittener Darstellung eines Brennraums ein Ausführungsbeispiel eines erfindungsgemäßen Brennstoffeinspritzsystems wie in Fig. 1 im Betriebszustand einer höheren Last;
- Fig. 3: in geschnittener Darstellung eines Brennraums ein Ausführungsbeispiel eines erfindungsgemäßen Brennstoffeinspritzsystems mit einem Brennstoffeinspritzventil nahe der Zündkerze;
- Fig. 4: in geschnittener Darstellung eines Brennraums ein weiteres Ausführungsbeispiel eines erfindungsgemäßen Brennstoffeinspritzsystems mit einem seitlich angeordneten Brennstoffeinspritzventil; und
- Fig. 5: ein viertes Ausführungsbeispiel eines erfindungsgemäßen Brennstoffeinspritzsystems mit neben der Zündkerze angeordnetem Brennstoffeinspritzventil.

### Beschreibung der Ausführungsbeispiele

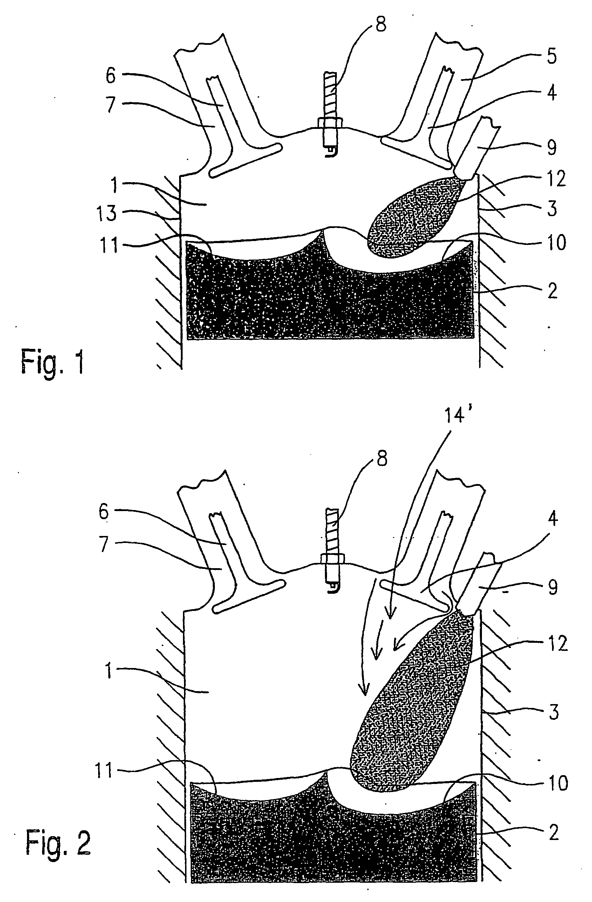

Fig. 1 zeigt in einer ausschnittsweisen, schematisierten Schnittdarstellung einen Längsschnitt durch eine erste Ausführungsform eines Brennstoffeinspritzsystems. Der Schnitt zeigt den Brennraum 1 eines Zylinders einer Brennkraftmaschine und einen Kolben 2, der in einer Zylinderwand 3 geführt wird und den Brennraum 1 begrenzt. Die zur Verbrennung nötige Luft wird durch ein erstes Einlaßventil 4 und den zugehörigen Einlaßkanal 5 sowie alternativ durch ein zweites Einlaßventil 6 und den zugehörigen zweiten Einlaßkanal 7 zugeführt. Weiter ist eine weitgehend zentral in der Mitte des Brennraums 1 angeordnete Zündkerze 8 zu erkennen, die bei Sicht auf die Schnittdarstellung zwischen den beiden Einlaßventilen 4 und 6 angeordnet ist. Bei der vorliegenden Ausführungsform ist ein Brennstoffeinspritzventil 9 seitlich neben dem ersten Einlaßventil 4 zur Zylinderwand 3 hin angeordnet. Der Kolben 2 weist auf der Seite des ersten Einlaßventils 4 eine erste Kolbenmulde 10 auf. Auf der Seite des zweiten Einlaßventils 6 weist der Kolben 2 eine zweite Kolbenmulde 11 auf. Weiter ist in der Fig. 1 ein Brennstoffstrahl 12, der sich hier als Wolke mit kegelförmiger Gestalt aufweitet, dargestellt.

Die Fig. 1 zeigt insgesamt den Brennraum 1 im Verdichtungshub kurz vor dem oberen Totpunkt. Bei Teillast soll relativ spät eingespritzt werden, damit sich im sog. Magermixbetrieb die Gemischwolke bis zum Zündzeitpunkt nicht zu weit im Brennraum 1 ausdehnt, da ansonsten ein zu mageres Gemisch entstehen würde. Dies hätte zur Folge, daß im Bereich der Zündkerze 8 kein zündfähiges Gemisch zur Verfügung stünde, und durch unverbrannte Fehlzündungen zu hohe Kohlenwasserstoffemissionen entstehen. Der Brennstoffstrahl 12 ist für diesen Betriebspunkt so ausgerichtet, daß er ohne die Strömungsverhältnisse im Inneren des Brennraums 1 zu berücksichtigen, genau auf die erste Kolbenmulde 10 ausgerichtet ist, wenn das Brennstoffeinspritzventil 9 öffnet. Durch die weitere Aufwärtsbewegung des Kolbens 2 in Richtung auf den oberen Totpunkt, wird dann das Gemisch in der ersten Kolbenmulde 10 umgelenkt und in Richtung auf die Zündkerze 8 gerichtet. Das erste Einlaßventil 4 bleibt demnach zu diesem Zeitpunkt im wesentlichen geschlossen, um keine störende Strömung zu erzeugen, die den Brennstoffeinspritzstrahl 12 ablenken könnte.

Ebenfalls zu erkennen ist, daß das zweite Einlaßventil 6 geöffnet ist, so daß durch den Einlaßkanal 7 eine Strömung in den Brennraum 1 einströmt. Diese legt sich an die dem ersten Einlaßventil 4 gegenüberliegende Zylinderwand 13 und an die zweite Kolbenmulde 11 an und bildet somit einen zweiten entgegengesetzten Wirbel, der ebenfalls das Brennstoff-Luftgemisch in Richtung auf die Zündkerze 8 treibt.

In besonders vorteilhafter Weise kann die hier beschriebene Ausführungsform der Erfindung umgesetzt werden, wenn für die Einlaßventile 6, 4 solche ohne Nockenwelle zur Verwendung kommen. Diese werden dann entweder hydraulisch oder elektromechanisch durch Aktoren oder Elektromagnete angesteuert und elektronisch in ihren Öffnungszeiten gesteuert. Dadurch können die Strömungsverhältnisse für jeden Zeitpunkt und jede Stelle des Kennfeldes der Brennkraftmaschine optimal bestimmt werden und die Strömungsverhältnisse in Verbindung mit dem Einspritzzeitpunkt des Brennstoffeinspritzventils 9 und der Dauer der Brennstoffeinspritzung optimal angepaßt werden, so daß stets im Bereich der Zündkerze 8 ein zündfähiges Gemisch zum Zündzeitpunkt entsteht.

Fig. 2 zeigt dieselbe Ausführungsform der Erfindung wie Fig. 1, jedoch zu einem früheren Zeitpunkt des Verdichtungshubes. Dargestellt ist der Zeitpunkt der Einspritzung von Brennstoff, der bei höherer Last weiter vor dem oberen Totpunkt liegt. Die Fig. 2 zeigt den Kolben 2, der mit der Zylinderwand 3 den im Schnitt dargestellten Brennraum 1 begrenzt. Weiter zu erkennen ist wiederum das erste Einlaßventil 4 mit dem entsprechenden Einlaßkanal 5 sowie das zweite Einlaßventil 6 mit dem dazugehörigen Einlaßkanal 7. Z. B. zentral mittig in dem Brennraum 1 ist die Zündkerze 8 angeordnet.

Die Fig. 2 zeigt den Betriebszustand, wenn eine höhere Last gegenüber dem in Fig. 1 gezeigten Betriebszustand vorliegt. Der Einspritzzeitpunkt ist nun früher, da eine größere Menge an Brennstoff in den Brennraum 1 eingespritzt werden soll, die sich noch ausreichend verteilen und vermischen muß. Der Brennstoffstrahl 12 würde nun entsprechend der Richtung des Brennstoffstrahls 12 in Fig. 1 mitten in den Brennraum 1 einspritzen, und nicht in eine erste Kolbenmulde 10 auf der Seite des ersten Einlaßventils 4. Dies ist jedoch erforderlich, um wieder die Umlenkung des Gemisches aus Brennstoff und Luft in Richtung auf die Zündkerze 8 zu erreichen, wenn sich der Kolben 2 weiter auf den oberen Totpunkt zu bewegt. Um dies sicherzustellen, wird zu dem hier dargestellten Betriebszeitpunkt das erste Einlaßventil 4 so weit geöffnet, daß eine Strömung 14' entsteht, die den Brennstoffstrahl 12 nach unten in Richtung auf die erste Kolbenmulde 10 ablenkt. Wiederum kann auch das zweite Einlaßventil 6 so weit geöffnet werden, daß ein zweiter Wirbel in der zweiten Kolbenmulde 11 entsteht.

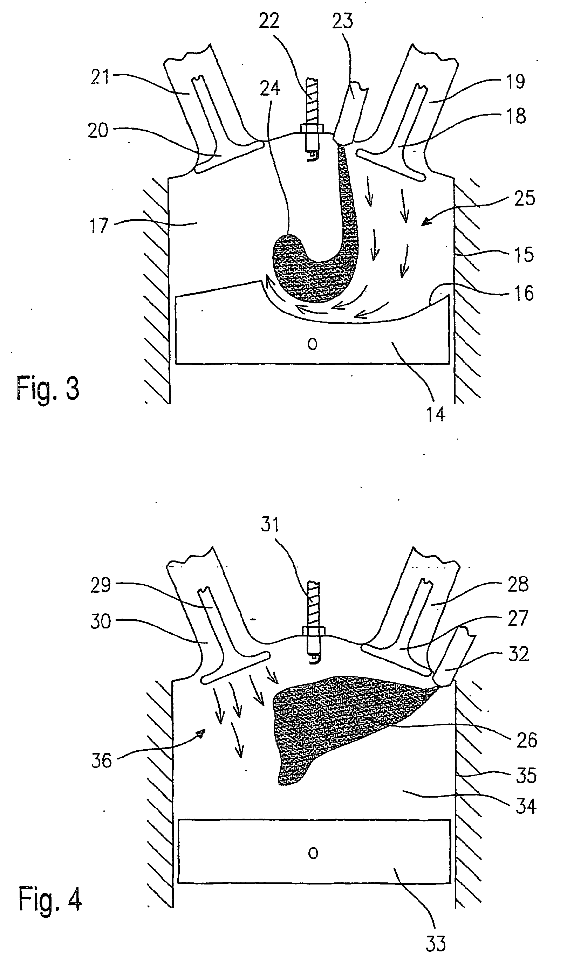

Fig. 3 zeigt eine weitere vorteilhafte Ausführungsform der Erfindung. Der im Schnitt dargestellte Brennraum 17 wird von einem Kolben 14 und der den Kolben 14 führenden Zylinderwand 15 begrenzt. Es ist ein erstes Einlaßventil 18 mit dem zugehörigen Einlaßkanal 19 vorhanden. Der Kolben 14 weist auf der Seite des ersten Einlaßventils 18 eine Kolbenmulde 16 auf. Zwischen diesem ersten Einlaßventil 18 und einem zweiten Einlaßventil 20 mit zugehörigem Einlaßkanal 21 ist beispielsweise zentral in der Mitte des Brennraums 17 die Zündkerze 22 angeordnet. Abweichend von der bisher beschriebenen Ausführungsform ist das Brennstoffeinspritzventil 23 auf der Seite des ersten Einlaßventils 18 jedoch neben diesem zur Zündkerze 22 hin angeordnet. Wenn nun das Brennstoffeinspritzventil 23 geöffnet wird, um einen Brennstoffstrahl 24 so in den Brennraum 17 einzuspritzen, daß zum optimalen Zeitpunkt ein zündfähiges Gemisch an der Zündkerze 22 erreicht wird, so kann in günstiger Art und Weise gleichzeitig eine Benetzung der Kolbenmulde 16 mit Brennstoff verhindert werden. Dies geschieht, indem das erste Einlaßventil 18 soweit geöffnet wird, daß eine Luftströmung 25 entsteht, die sich an die Kolbenmulde 16 anlegt und den Brennstoffstrahl 24 und die sich dabei bildende Gemischwolke von der Oberfläche der Kolbenmulde 16 fernhält. Durch diese Art einer Isolier- und Trennschicht kann eine Rußbildung und die Emission von Kohlenwasserstoffen vermindert werden.

Fig. 4 zeigt eine weitere erfindungsgemäße Ausführungsform des Brennstoffeinspritzsystems, bei dem ein eingespritzter Brennstoffstrahl 26 gezielt aufgeweitet wird. Der Brennraum 34 wird auch hier von einem Kolben 33, der von der zugehörigen Zylinderwand 35 geführt wird, begrenzt und ist im Schnitt dargestellt. Weiter weist das Brennstoffeinspritzsystem ein erstes Einlaßventil 27 mit zugehörigem Einlaßkanal 28 und ein zweites Einlaßventil 29 mit zugehörigem Einlaßkanal 30 auf. Zwischen diesen ist z. B. zentral mittig im Brennraum 34 eine Zündkerze 31 angeordnet. Das Brennstoffeinspritzventil 32 ist nun seitlich neben dem ersten Einlaßventil 27 zur Zylinderwand 35 hin angeordnet. Durch die erfindungsgemäße Ausgestaltung des Brennstoffeinspritzsystems ist es nun möglich, wenn der Brennstoffstrahl 26 durch das Brennstoffeinspritzventil 32 in den Brennraum 34 eingespritzt wird, daß durch Öffnen des zweiten Einlaßventils 29 eine Gegenströmung 36 erzeugt wird, die den Brennstoffstrahl 26, wie aus der Zeichnung beispielhaft ersichtlich, aufweitet. Durch die hier dargestellte Anordnung und Ausgestaltung des Brennstoffeinspritzsystems kann der Brennstoffstrahl so aufgeweitet werden, daß dieser ein ausreichend -großes Volumen einnimmt und somit ein fettes Gemisch vermieden wird.

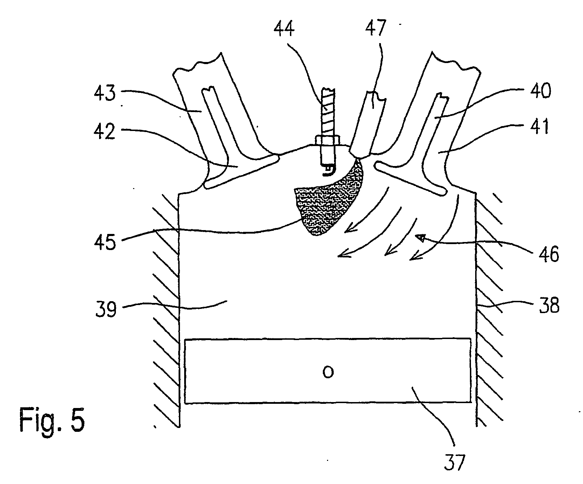

Fig. 5 zeigt eine erfindungsgemäße Ausführung eines Brennstoffeinspritzsystems, mit der es möglich ist, ohne Verwendung einer Kolbenmulde bei Teillast ein zündfähiges Gemisch zum richtigen Zeitpunkt zur Zündkerze 44 zu bringen. Die Darstellung zeigt einen im Schnitt dargestellten Brennraum 39, der durch einen Kolben 37, der in einer Zylinderwand 38 geführt wird, abgeschlossen wird. Es ist ein erstes Einlaßventil 40 mit einem dazugehörigen Einlaßkanal 41 und ein zweites Einlaßventil 42 mit dazugehörigem Einlaßkanal 43 vorhanden. Zwischen diesen ist z. B. zentral mittig im Brennraum 39 eine Zündkerze 44 angeordnet. Ein Brennstoffeinspritzventil 47 ist bei dieser Ausführungsform auf der Seite des ersten Einlaßventils 40 zur Zündkerze 44 hin orientiert vorgesehen. Der dargestellte Betriebszustand entspricht dem Verdichtungshub, währenddessen sich der Kolben 37 auf den oberen Totpunkt hin zubewegt. Wenn nun im Teillastbereich eine relativ geringe Menge Brennstoff durch das Brennstoffeinspritzventil 47 zum richtigen Zeitpunkt eingespritzt wird und ein Brennstoffstrahl 45 gebildet wird, so kann erfindungsgemäß das erste Einlaßventil 40 so weit geöffnet werden, daß eine beschleunigende Rückenströmung 46 entsteht, die den Brennstoffstrahl 45 in Richtung auf die Zündkerze 44 treibt. Vorteilhaft wird somit eine Gemischwolke, bestehend aus Brennstoff und Luft, die eine ausreichend hohe Konzentration aufweist, um zündfähig zu sein, rechtzeitig zur Zündung an die Zündkerze 44 verbracht.

## Patentansprüche

1. Brennstoffeinspritzsystem für fremdgezündete Brennkraftmaschinen mit zumindest einem Brennstoffeinspritzventil (9,23,32,47), das Brennstoff in einen Brennraum (1,17,34,39) der Brennkraftmaschine einspritzt, der von einer Zylinderwand (3,13,15,35,38) begrenzt ist, in der ein Kolben (2,14,33,37) geführt ist, und mit einer in den Brennraum (1,17,34,39) ragenden Zündkerze (8,22,31,44), wobei die Einspritzdauer und Einspritzmenge des Brennstoffeinspritzventils (9,23,32,47) frei veränderbar steuerbar ist, wobei zumindest zwei Einlaßventile (4,6,18,20,27,29,40,42) zum Brennraum (1,17,34,39) vorhanden sind **dadurch gekennzeichnet, daß** Öffnungsdauer und Öffnungsquerschnitt der Einlaßventile (4,6,18,20,27,29,40,42) jeweils voneinander unabhängig und frei veränderbar steuerbar sind, wodurch die Verteilung des Brennstoffs im Brennraum (1,17,34,39) beeinflußbar ist.

2. Brennstoffeinspritzsystem nach Anspruch 1,
**dadurch gekennzeichnet,**
**daß** von den Einlaßventilen (4,6,18,20,27,29,40,42) verschlossene Einlaßkanäle (5,7,19,21,28,30,41,43) unter verschiedenen, nicht im Raum parallelen Richtungen in den Brennraum (1,17,34,39) münden.

3. Brennstoffeinspritzsystem nach Anspruch 1 oder 2,
**dadurch gekennzeichnet,**
**daß** die Zündkerze (8,22,31,44) zwischen einem ersten Einlaßventil (4, 18, 27, 40) und einem zweiten Einlaßventil (6, 20, 29, 42) im Brennraum (1,17,34,39) angeordnet ist.

4. Brennstoffeinspritzsystem nach Anspruch 3,
**dadurch gekennzeichnet,**
**daß** das Brennstoffeinspritzventil (9,32) auf der Seite des ersten Einlaßventils (4,27) zur Zylinderwand (3,35) hin angeordnet ist.

5. Brennstoffeinspritzsystem nach Anspruch 3 oder 4,
**dadurch gekennzeichnet,**
**daß** der Kolben (2) auf der Seite des ersten Einlaßventils (4) eine erste Kolbenmulde (10) aufweist.

6. Brennstoffeinspritzsystem nach Anspruch 3,
**dadurch gekennzeichnet,**
**daß** auf der Seite des ersten Einlaßventils (18,40) zur Zündkerze (22,44) hin ein Brennstoffeinspritzventil (23,47) angeordnet ist.

7. Brennstoffeinspritzsystem nach einem der vorhergehenden Ansprüche,
**dadurch gekennzeichnet,**
**daß** die Einlaßventile (4,6,18,20,27,29,40,42) solche mit variabler Ventilhubsteuerung ohne Nockenwelle sind.

8. Verfahren zur Brennstoffeinspritzung in einen Brennraum (1,17,34,39) einer fremdgezündeten Brennkraftmaschine, wobei der Brennraum (1,17,34,39) von einer Zylinderwand (3,13,15,35,38) begrenzt ist, in der ein Kolben (2,14,33,37) geführt ist und der Brennraum (1,17,34,39) zumindest ein Brennstoffeinspritzventil (9,23,32,47) aufweist, das Brennstoff in den Brennraum (1,17,34,39) einspritzt, wobei die Einspritzdauer und Einspritzmenge des Brennstoffeinspritzventils (9,23,32,47) frei veränderbar steuerbar ist, wobei eine in den Brennraum (1,17,34,39) ragende Zündkerze (8,22,31,44) vorhanden ist, und zumindest zwei Einlaßventile (4,6,18,20,27,29,40,42) vorgesehen sind,
**dadurch gekennzeichnet,**
**daß** die Öffnungsdauer und der Öffnungsquerschnitt der Einlaßventile (4,6,18,20,27,29,40,42) jeweils voneinander unabhängig und frei veränderbar steuerbar sind,
**daß** die Einlaßventile (4,6,18,20,27,29,40,42) bezüglich Öffnungsdauer und Öffnungsquerschnitt unterschiedlich geöffnet werden und davon abhängige definierte strömungsverhältnisse eines einströmenden Gases erzeugt werden und
**daß** das Brennstoffeinspritzventil (9,23,32,47) bezüglich Einspritzdauer und Einspritzmenge so betätigt wird, daß der Brennstoff aufgrund der entstehenden Strömungsverhältnisse zielgerichtet verteilt wird.

9. Verfahren nach Anspruch 8,
**dadurch gekennzeichnet,**
**daß** die Zündkerze (8) zwischen einem ersten Einlaßventil (4) und einem zweiten Einlaßventil (6) im Brennraum (1) angeordnet ist, der Kolben (2) auf der Seite des ersten Einlaßventils (4) eine erste Kolbenmulde (10) aufweist, auf der Seite des ersten Einlaßventils (4) zur Zylinderwand (3) hin das Brennstoffeinspritzventil (9) angeordnet ist,
in die erste Kolbenmulde (10) ein Brennstoffstrahl (12) des Brennstoffeinspritzventils (9) ausgerichtet wird, wenn der Kolben (2) nahe dem oberen Totpunkt bewegt wird und daß bei Teillastbetrieb der Brennkraftmaschine das erste Einlaßventil (4) zu diesem Zeitpunkt im wesentlichen geschlossen wird.

10. Verfahren nach Anspruch 9,
**dadurch gekennzeichnet,**
**daß** mit zunehmender Last der Brennkraftmaschine das erste Einlaßventil (4) geöffnet wird und der Brennstoff zunehmend früher, d. h. bei weiter vom oberen Totpunkt entfernten Kolben (2), eingespritzt wird.

11. Verfahren nach Anspruch 9 oder 10,
**dadurch gekennzeichnet,**
**daß** der Kolben (2) auf der Seite des zweiten Einlaßventils (6) eine zweite Kolbenmulde (11) aufweist,
ein vom zweiten Einlaßventil (6) verschlossener Einlaßkanal (7) zur zweiten Kolbenmulde (11) gerichtet ist und daß das zweite Einlaßventil (6) jeweils so geöffnet wird, daß eine einen Wirbel in der zweiten Kolbenmulde (11) erzeugende Strömung entsteht.

12. Verfahren nach Anspruch 8,
**dadurch gekennzeichnet,**
**daß** die Zündkerze (31) zwischen einem ersten Einlaßventil (27) und einem zweiten Einlaßventil (29) im Brennraum (34) angeordnet ist, auf der Seite des ersten Einlaßventils (27) zur Zylinderwand (35) hin das Brennstoffeinspritzventil (32) angeordnet ist,
und **daß** bei hoher Last das zweite Einlaßventil (29) so frühzeitig und weit geöffnet wird, daß eine den eingespritzten Brennstoffstrahl (26) aufweitende Gegenströmung im Brennraum (34) bewirkt wird.

13. Verfahren nach Anspruch 8,
**dadurch gekennzeichnet,**
**daß** im Brennraum (17,39) zwischen einem ersten Einlaßventil (18, 40) und einem zweiten Einlaßventil (20, 42) eine Zündkerze (22,44) angeordnet ist, ein Brennstoffeinspritzventil (23, 47) auf der Seite des ersten Einlaßventils (18,40) zur Zündkerze (22,44) hin angeordnet ist und bei Teillast das erste Einlaßventil (18,40) geöffnet wird und **dadurch** eine Strömung den Brennstoffstrahl (24,45) zur Zündkerze lenkt.

14. Verfahren nach Anspruch 13
**dadurch gekennzeichnet,**
**daß** der Kolben (14) auf der Seite des ersten Einlaßventils (18) eine erste Kolbenmulde (16) aufweist, ein Brennstoffstrahl (24) des Brennstoffeinspritzventils (23) in die erste Kolbenmulde (16) gerichtet wird, und daß das erste Einlaßventil (18) so weit geöffnet wird, daß eine an einer Fläche der ersten Kolbenmulde (16) anliegende Strömung entsteht und **dadurch** eine Benetzung der Kolbenmuldenfläche mit Brennstoff verhindert wird.

## Claims

1. Fuel injection system for spark-ignition internal combustion engines, having at least one fuel injection valve (9, 23, 32, 47) which injects fuel into a combustion chamber (1, 17, 34, 39) of the internal combustion engine, the combustion chamber being delimited by a cylinder wall (3, 13, 15, 35, 38) in which a piston (2, 14, 33, 37) is guided, and having a spark plug (8, 22, 31, 44) which projects into the combustion chamber (1, 17, 34, 39), it being possible for the injection time and injection quantity of the fuel injection valve (9, 23, 32, 47) to be controlled in a freely variable way, at least two intake valves (4, 6, 18, 20, 27, 29, 40, 42) to the combustion chamber (1, 17, 34, 39) being present, **characterized in that** the opening duration and opening cross section of the intake valves (4, 6, 18, 20, 27, 29, 40, 42) can in each case be controlled independently of one another and freely variably, with the result that it is possible to influence the distribution of the fuel in the combustion chamber (1, 17, 34, 39).

2. Fuel injection system according to Claim 1, **characterized in that** intake ducts (5, 7, 19, 21, 28, 30, 41, 43), which are closed by the intake valves (4, 6, 18, 20, 27, 29, 40, 42), open out into the combustion chamber (1, 17, 34, 39) in different directions which are not spatially parallel.

3. Fuel injection system according to Claim 1 or 2, **characterized in that** the spark plug (8, 22, 31, 44) is arranged between a first intake valve (4, 18, 27, 40) and a second intake valve (6, 20, 29, 42) in the combustion chamber (1, 17, 34, 39).

4. Fuel injection system according to Claim 3, **characterized in that** the fuel injection valve (9, 32) is arranged on the side of the first intake valve (4, 27) facing the cylinder wall (3, 35).

5. Fuel injection system according to Claim 3 or 4, **characterized in that** the piston (2) has a first piston recess (10) on the side of the first intake valve (4).

6. Fuel injection system according to Claim 3, **characterized in that** a fuel injection valve (23, 47) is arranged on the side of the first intake valve (18, 40) facing the spark plug (22, 44).

7. Fuel injection system according to one of the preceding claims, **characterized in that** the intake valves (4, 6, 18, 20, 27, 29, 40, 42) are intake valves with a variable valve lift control without a camshaft.

8. Method for injecting fuel into a combustion chamber (1, 17, 34, 39) of a spark-ignition internal combustion engine, the combustion chamber (1, 17, 34, 39) being delimited by a cylinder wall (3, 13, 15, 35, 38) in which a piston (2, 14, 33, 37) is guided, and the combustion chamber (1, 17, 34, 39) having at least one fuel injection valve (9, 23, 32, 47) which injects fuel into the combustion chamber (1, 17, 34, 39), it being possible for the injection time and injection quantity of the fuel injection valve (9, 23, 32, 47) to be controlled in a freely variable manner, and a spark plug (8, 22, 31, 44) which projects into the combustion chamber (1, 17, 34, 39) being present, and at least two intake valves (4, 6, 18, 20, 27, 29, 40, 42) being provided, **characterized in that** the opening duration and the opening cross section of the intake valves (4, 6, 18, 20, 27, 29, 40, 42) can in each case be controlled independently of one another and in a freely variable manner, **in that** the intake valves (4, 6, 18, 20, 27, 29, 40, 42) are opened differently in terms of opening duration and opening cross section and defined flow conditions dependent on these parameters are generated for a gas which is flowing in, and **in that** the fuel injection valve (9, 23, 32, 47) is actuated in such a way in terms of injection time and injection quantity that the fuel is distributed in a targeted fashion on account of the flow conditions which are produced.

9. Method according to Claim 8, **characterized in that** the spark plug (8) is arranged between a first intake valve (4) and a second intake valve (6) in the combustion chamber (1), the piston (2) has a first piston recess (10) on the side of the first intake valve (4), the fuel injection valve (9) is arranged on the side of the first intake valve (4) facing the cylinder wall (3), a fuel jet (12) of the fuel injection valve (9) is directed into the first piston recess (10) when the piston (2) is moved close to the top dead centre, and **in that** during part-load operation of the internal combustion engine the first intake valve (4) is substantially closed at this instant.

10. Method according to Claim 9, **characterized in that**, as the load on the internal combustion engine increases, the first intake valve (4) is opened and the fuel is injected increasingly early, i.e. with the piston (2) further away from the top dead centre.

11. Method according to Claim 9 or 10, **characterized in that** the piston (2) has a second piston recess (11) on the side of the second intake valve (6), an intake duct (7) which is closed by the second intake valve (6) is directed towards the second piston recess (11), and **in that** the second intake valve (6) is in each case opened in such a way as to produce a flow which generates a swirl in the second piston recess (11).

12. Method according to Claim 8, **characterized in that** the spark plug (31) is arranged between a first intake valve (27) and a second intake valve (29) in the combustion chamber (34), the fuel injection valve (32) is arranged on the side of the first intake valve (27) facing the cylinder wall (35), and **in that** at a high load the second intake valve (29) is opened sufficiently early and wide to produce an oppositely directed flow, which widens the injected fuel jet (26), in the combustion chamber (34).

13. Method according to Claim 8, **characterized in that** in the combustion chamber (17, 39) a spark plug (22, 44) is arranged between a first intake valve (18, 40) and a second intake valve (20, 42), a fuel injection valve (23, 47) is arranged on the side of the first intake valve (18, 40) facing the spark plug (22, 44) and under partial load the first intake valve (18, 40) is opened and thereby a flow diverts the fuel jet (24, 45) towards the spark plug.

14. Method according to Claim 13, **characterized in that** the piston (14) has a first piston recess (16) on the side of the first intake valve (18), a fuel jet (24) from the fuel injection valve (23) is directed into the first piston recess (16), and **in that** the first intake valve (18) is opened sufficiently wide for a flow which acts on a surface of the first piston recess (16) to be generated, and as a result fuel is prevented from wetting the piston recess surface.

## Revendications

1. Système d'injection de carburant pour des moteurs à combustion interne à allumage commandé, comportant au moins un injecteur de carburant (9, 23, 32, 47) qui injecte du carburant dans une chambre de combustion (1, 17, 34, 39) limitée par une paroi de cylindre (3, 13, 15, 35, 38) dans laquelle est guidé un piston (2, 14, 33, 37) et comportant une bougie (8, 22, 31, 44) qui dépasse dans la chambre de combustion (1, 17, 34, 39), l'injecteur de carburant (9, 23, 32, 47) ayant une durée d'injection et une quantité d'injection qui peuvent être commandées en les modifiant librement et au moins deux soupapes d'admission (4, 6, 18, 20, 27, 29, 40, 42)se trouvent vers la chambre de combustion (1, 17, 34, 39),
**caractérisé en ce que**
les soupapes d'admission (4, 6, 18, 20, 27, 29, 40, 42) ont une durée d'ouverture et une section transversale d'ouverture respectivement indépendantes l'une de l'autre pouvant être commandées en les modifiant librement, ce qui permet d'agir sur la répartition du carburant dans la chambre de combustion (1, 17, 34, 39).

2. Système d'injection de carburant selon la revendication 1,
**caractérisé en ce que**
des canaux d'admission (5, 7, 19, 21, 28, 30, 41, 43) fermés par les soupapes d'admission (4, 6, 18, 20, 27, 29, 40, 42) débouchent dans la chambre de combustion (1, 17, 34, 39) dans différentes directions non parallèles dans l'espace.

3. Système d'injection de carburant selon la revendication 1 ou 2,
**caractérisé en ce que**
la bougie (8, 22, 31, 44) est placée dans la chambre de combustion (1, 17, 34, 39) entre une première soupape d'admission (4, 18. 27, 40) et une deuxième soupape d'admission (6, 20, 29, 42).

4. Système d'injection de carburant selon la revendication 3,
**caractérisé en ce que**
l'injecteur de carburant (9, 32) est placé sur le côté de la première soupape d'admission (4, 27), à savoir vers la paroi de cylindre (3, 35).

5. Système d'injection de carburant selon la revendication 3 ou 4,
**caractérisé en ce que**
le piston (2) comporte un premier creux de piston (10) du côté de la première soupape d'admission (4).

6. Système d'injection de carburant selon la revendication 3,
**caractérisé en ce que**
un injecteur de carburant (23, 47) est placé sur le côté de la première soupape d'admission (18, 40), à savoir vers la bougie (22, 44).

7. Système d'injection de carburant selon l'une des revendications précédentes,
**caractérisé en ce que**
les soupapes d'admission (4, 6, 18, 20, 27, 29, 40, 42) sont des soupapes ayant une commande de course sans arbre à came.

8. Procédé pour injecter du carburant dans une chambre de combustion (1, 17, 34, 39) d'un moteur à combustion interne à allumage commandé, selon lequel la chambre de combustion (1, 17, 34, 39) est délimitée par une paroi de cylindre (3, 13, 15, 35, 38) dans laquelle est guidé un piston (2, 14, 33. 37) et la chambre de combustion (1, 17. 34, 39) comporte au moins un injecteur de carburant (9, 23, 32, 47) qui injecte du carburant dans la chambre de combustion (1, 17, 34, 39), l'injecteur de carburant (9, 23, 32, 47) ayant une durée d'injection et une quantité d'injection qui peuvent être commandées en les modifiant librement, une bougie (8, 22, 31, 44) dépasse dans la chambre de combustion (1, 17, 34, 39) et on prévoit au moins deux soupapes d'admission (4, 6, 18, 20, 27, 29, 40, 42),
**caractérisé en ce que**
les soupapes d'admission (4, 6, 18, 20, 27, 29, 40, 42) ont une durée d'ouverture et une section transversale d'ouverture respectivement indépendantes l'une de l'autre qu'on peut commander en les modifiant librement,
les soupapes d'admission (4, 6, 18, 20, 27, 29, 40, 42) sont ouvertes différemment pour ce qui est de la durée d'ouverture et de la section transversale d'ouverture, ce qui permet de produire en fonction de celles-ci des conditions définies d'écoulement pour un gaz qui entre et, pour ce qui est de la durée d'injection et de la quantité d'injection, l'injecteur de carburant (9, 23, 32, 47) est actionné de telle manière que le carburant soit réparti de manière appropriée d'après les conditions d'écoulement obtenues.

9. Procédé selon la revendication 8,
**caractérisé en ce que**
la bougie (8) est placée dans la chambre de combustion (1) entre une première soupape d'admission (4) et une deuxième soupape d'admission (6), le piston (2) comporte un premier creux de piston (10) sur le côté de la première soupape d'admission (4), l'injecteur de carburant (9) est placé sur le côté de la première soupape d'admission (4) à savoir vers la paroi de cylindre (3), un jet de carburant (12) de l'injecteur de carburant (9) est orienté dans le premier creux de piston (10) quand le piston (2) bouge près du point mort haut, et
la première soupape d'admission (4) est pratiquement fermée au moment où le moteur à combustion interne fonctionne à charge partielle.

10. Procédé selon la revendication 9,
**caractérisé en ce que**
lorsque la charge du moteur à combustion interne augmente, la première soupape d'admission (4) s'ouvre et le carburant est injecté de plus en plus tôt c'est-à-dire quand le piston (2) est le plus éloigné du point mort haut.

11. Procédé selon la revendication 9 ou 10,
**caractérisé en ce que**
le piston (2) comporte un deuxième creux de piston (11) du côté de la deuxième soupape d'admission (6), un canal d'admission (7) fermé par la deuxième soupape d'admission (6) est orienté vers le deuxième creux de piston (11) et
la deuxième soupape d'admission (6) s'ouvre à chaque fois de manière à obtenir un écoulement produisant un tourbillon dans le deuxième creux de piston (11).

12. Procédé selon la revendication 8,
**caractérisé en ce que**
la bougie (31) est placée dans la chambre de combustion (34) entre une première soupape d'admission (27) et une deuxième soupape d'admission (29), l'injecteur de carburant (32) est placé du côté de la première soupape d'admission (27) à savoir vers la paroi de cylindre (35) et,
quand la charge est élevée, la deuxième soupape d'admission (29) est ouverte assez tôt et assez largement pour provoquer dans la chambre de combustion (34) un contre-courant qui élargit le jet de carburant (26) injecté.

13. Procédé selon la revendication 8,
**caractérisé en ce que**
une bougie (22, 44) est placée dans la chambre de combustion (17, 39) entre une première soupape d'admission (18, 40) et une deuxième soupape d'admission (20, 42), un injecteur de carburant (23, 47) est placé du côté de la première soupape d'admission (18, 40) à savoir vers la bougie (22, 44), et
la première soupape d'admission (18, 40) s'ouvre quand la charge est partielle et donc qu'un courant dévie le jet de carburant (24, 45) vers la bougie.

14. Procédé selon la revendication 13,
**caractérisé en ce que**
le piston (14) comporte un premier creux de piston (16) du côté de la première soupape d'admission (18), un jet de carburant (24) de l'injecteur de carburant (23) est orienté dans le premier creux de piston (16), et
la première soupape d'admission (18) s'ouvre jusqu'à ce qu'on obtienne un courant appliqué à une surface du premier creux de piston (16) et par conséquent qu'on empêche la surface du creux de piston d'être mouillée par du carburant.
